# FASCICULE DE BREVET EUROPEEN

(11) **EP 0 443 966 B1**
(45) Date de publication et mention de la délivrance du brevet: **26.10.1994**
(21) Numéro de dépôt: 91420054.8
(22) Date de dépôt: 19.02.1991
(51) Int. Cl.: H04N 5/76, H04N 9/64

(54) **Système de connexion automatique sur une entrée s-vhs d'un téléviseur couleur**
System zum automatischen Anschluss des S-VHS-Eingangs eines Farbfernsehers
Automatic connection system for a S-VHS input of a colour television

(30) Priorité: 22.02.1990 FR 9002460
(43) Date de publication de la demande: 28.08.1991
(73) Titulaire: SGS-THOMSON MICROELECTRONICS S.A., 94250 Gentilly (FR)
(72) Inventeur: Imbert, Michel, F-38500 Coublevie (FR); Meunier, Thierry, F-38019 Grenoble (FR)
(74) Mandataire: de Beaumont, Michel

(56) Documents cités:
- EP-A- 0 260 861
- GB-A- 2 089 167

## Description

La présente invention concerne les circuits d'un téléviseur couleur.

Il existe actuellement plusieurs normes d'émission de signaux de télévision couleur, parmi lesquelles on peut notamment mentionner les normes PAL, NTSC et SECAM.

Pour éviter des réglages aux téléspectateurs sélectionnant une chaîne de télévision particulière sans connaître le type de norme selon lequel le signal est envoyé sur cette chaîne, il existe actuellement des circuits d'identification automatique de standard. Sous l'action d'un circuit de sélection conditionnant de façon appropriée le circuit d'identification, ce dernier circuit teste le signal reçu, et, dès qu'il a reconnu le standard pour lequel il a été conditionné par le circuit de sélection, envoie des signaux de commande à divers circuits internes du téléviseur pour les bloquer sur l'état correspondant au standard reconnu.

D'autres part, certains téléviseurs sont adaptés à recevoir ou bien des signaux radiotélévisés arrivant sur une antenne, ou bien des signaux en provenance d'un magnétoscope.

Classiquement, même s'il existe deux connecteurs d'entrée, un pour la connexion de l'antenne et un pour la connexion au magnétoscope, ces deux connecteurs sont raccordés à une même borne d'entrée du circuit d'identification de standard.

Toutefois, actuellement, on tend à développer un nouveau standard pour les signaux de magnétoscope, appelé standard S-VHS. Dans ce standard, le signal vidéo du magnétoscope est transmis au téléviseur couleur par deux connexions. Un premier fil transmet la sous-porteuse couleur et est connecté sur une entrée particulière, dite entrée S-VHS, du téléviseur. Un deuxième fil transmet les informations de luminance et de synchronisation et est connecté soit à l'entrée d'antenne soit à une prise de péritélévision (SCART).

La séparation sur deux fils des informations de luminance et de chrominance en provenance d'un magnétoscope permet notamment l'élargissement de la bande passante du signal de luminance et donc une meilleure définition de l'image.

Toutefois, il se pose un problème qui est que le signal arrivant sur le fil d'antenne ne correspond plus à aucune des normes usuelles et qu'il faut sélectionner par un commutateur le connecteur spécifique sur lequel arrive le signal S-VHS. Ainsi, l'utilisateur devra avoir une commande supplémentaire pour relier la borne d'accès du signal S-VHS aux circuits internes du téléviseur. Ceci représente plusieurs inconvénients. D'une part, pour l'utilisateur, le fait de devoir actionner un commutateur manuel supplémentaire constitue une contrainte alors que l'on tend au contraire à rendre les postes de télévision couleur de plus en plus facile à utiliser. D'autre part, la prévision d'un commutateur manuel supplémentaire accroît le coût du téléviseur.

Ainsi, un objet de la présente invention est de prévoir une connexion automatique du téléviseur couleur sur une entrée S-VHS dès qu'un signal est présent sur cette entrée.

Un autre objet de la présente invention est de prévoir une telle connexion automatique qui augmente aussi peu que possible la complexité des circuits internes d'un téléviseur.

Pour atteindre ces objets, la présente invention utilise, en grande partie, pour réaliser la connexion automatique des circuits préexistants dans un téléviseur couleur.

Plus particulièrement, la présente invention prévoit un circuit de connexion automatique sur l'une ou l'autre de deux bornes d'entrées d'un récepteur de télévision, chacune de ces entrées pouvant recevoir des signaux video selon l'un de plusieurs standards, comprenant un circuit d'identification de standard et un circuit de sélection pour commander le circuit d'identification, le circuit d'identification envoyant un signal d'inhibition au circuit de sélection quand il a détecté un signal correspondant au type de standard pour lequel il est sélectionné, comprenant en outre un commutateur dont la première borne est connectée à l'entrée du circuit d'identification et dont la deuxième borne peut être reliée à l'une ou l'autre des bornes d'entrée sous l'action d'un signal de commande ; et un diviseur recevant un signal périodique et fournissant un signal pour commander le circuit de sélection selon une première période et le commutateur selon une période moitié, le fonctionnement de ce diviseur étant susceptible d'être inhibé par ledit signal d'inhibition.

Selon un mode de réalisation de la présente invention, le signal envoyé au diviseur est un signal de retour trame (RT) de télévision.

Selon un mode de réalisation de la présente invention, la première borne d'entrée est la borne d'entrée d'antenne (CVBS) et la deuxième borne d'entrée une borne S-VHS.

Ces objets, caractéristiques et avantages ainsi que d'autres de la présente invention seront exposés plus en détail dans la description suivante de modes de réalisation particuliers faite en relation avec les figures jointes parmi lesquelles :
la figure 1 représente schématiquement et sous forme de blocs un circuit de connexion automatique selon la présente invention ;
la figure 2 représente des chronogrammes destinés à expliquer le fonctionnement du circuit selon la présente invention.

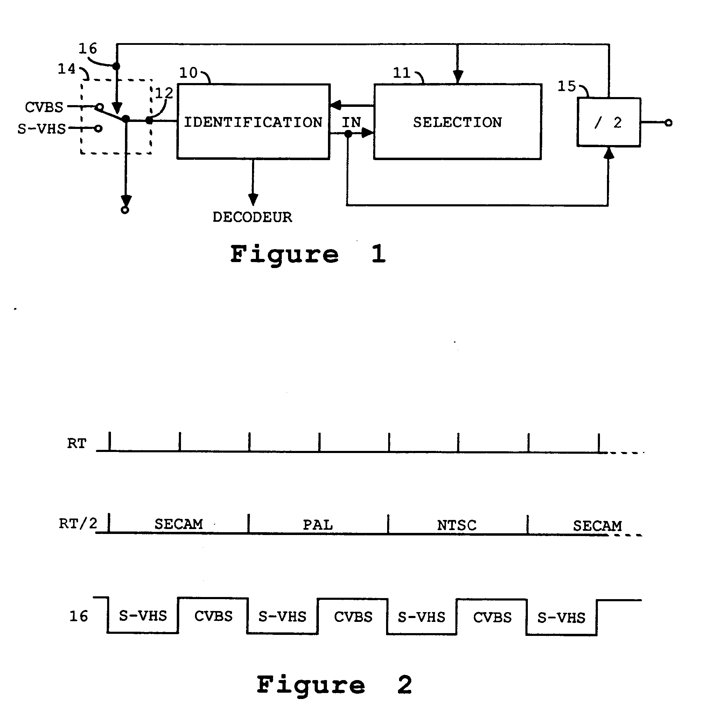

Comme le représente la figure 1, le circuit selon l'invention utilise un circuit classique 10 d'identification de standard et un circuit classique 11 de sélection. Ces circuits peuvent être ceux incorporés dans le circuit intégré TEA 5640 commercialisé par la société SGS-Thomson Microélectronics. Ces circuits de sélection et d'identification coopèrent pour, selon des séquences prédéterminées, placer le circuit d'identification dans une configuration de reconnaissance d'un premier, d'un second, puis d'un troisième standard. Une fois que le circuit d'identification a reconnu un standard, il envoie un signal d'inhibition IN au circuit de sélection pour interrompre la recherche et envoie des signaux de commande à divers circuits internes du téléviseur de façon à agencer ces circuits pour qu'ils puissent traiter le signal selon le standard identifié. Habituellement, pendant la phase de recherche, le circuit de sélection est incrémenté à la fréquence correspondant au signal de retour trame RT du signal de télévision. Classiquement, la borne d'entrée 12 du circuit d'identification est connectée directement à l'entrée recevant le signal video composite provenant de l'antenne ou de la prise SCART.

L'invention concerne le cas où le signal d'entrée vers le téléviseur peut être présent ou bien sur l'entrée d'antenne (CVBS) ou bien sur une entrée de magnétoscope particulière (S-VHS). Pour traiter ce cas, la présente invention prévoit d'adjoindre au circuit d'identification de l'art antérieur, d'une part, un commutateur d'entrée 14, d'autre part, un diviseur par deux 15.

La première borne du commutateur d'entrée 14 est reliée à la borne d'entrée 12 du circuit d'identification 10. La deuxième borne du commutateur d'entrée peut être connectée ou bien à l'entrée CVBS ou bien à l'entrée S-VHS. Ce commutateur est commandé par une borne de commande 16. Le diviseur par deux 15 reçoit le signal de retour trame RT et fournit un signal à fréquence moitié (période double). Ce signal est envoyé d'une part au circuit de sélection 11 pour déterminer sa séquence de fonctionnement à une fréquence moitié du signal de retour trame RT, c'est-à-dire que le circuit de sélection restera dans un état donné (en l'absence d'inhibition) pendant la durée de deux trames, et d'autre part à l'entrée de commande 16 du commutateur 14. Cette entrée de commande est conçue pour que le commutateur bascule au rythme du signal de retour trame RT. Ainsi, par exemple, à partir du signal RT (voir figure 2), le diviseur par deux fournit à sa sortie 16 un signal en créneaux tel que celui représenté en figure 2. Le circuit de sélection 11 est commandé seulement par les fronts montants ou descendants des créneaux alors que le commutateur 14 est commandé par les niveaux hauts et bas.

En outre, la présente invention prévoit d'envoyer la sortie d'inhibition IN du circuit d'identification 10 non seulement au circuit de sélection 11 mais aussi au circuit diviseur 15.

La figure 2 représente un exemple de cycle de fonctionnement du circuit selon l'invention. Pendant les deux premières trames, le circuit de sélection est agencé pour positionner le circuit d'identification sur la recherche du standard SECAM. Pendant la première trame, le commutateur est relié à l'entrée S-VHS et, pendant la trame suivante, à l'entrée CVBS. Si pendant la première trame un signal SECAM est identifié sur l'entrée S-VHS, le cycle de recherche s'arrête, le signal IN inhibitant les circuits de sélection et de division par deux. Si aucun signal n'a été identifié pendant les deux premières trames, le circuit de sélection positionne le circuit d'identification en recherche du standard PAL et à nouveau les entrées S-VHS et CVBS sont examinées. Il en est de même ensuite pour le standard NTSC et le cycle se répète jusqu'à ce qu'une identification se produise.

On notera que le circuit décrit précédemment est un circuit à priorité. En effet, s'il existe simultanément des signaux sur les entrées CVBS et S-VHS, le circuit est d'abord positionné sur l'entrée S-VHS et s'arrêtera sur ce standard si un magnétoscope est branché. Si l'on veut capter des signaux d'antenne, il faudra interrompre le fonctionnement du magnétoscope.

Un avantage du circuit selon la présente invention est qu'il est particulièrement simple et utilise essentiellement des composants préexistants et déjà couramment commercialisés.

## Revendications

1. Circuit de connexion automatique sur l'une ou l'autre des deux bornes d'entrées d'un récepteur de télévision, chacune de ces entrées pouvant recevoir des signaux video selon l'un des plusieurs standards, comprenant un circuit d'identification de standard (10) et un circuit de sélection (11) pour commander le circuit d'identification, le circuit d'identification envoyant un signal d'inhibition (IN) au circuit de sélection quand il a détecté un signal correspondant au type de standard pour lequel il est sélectionné, caractérisé en ce qu'il comprend en outre :
- un commutateur (14) dont la première borne (12) est connectée à l'entrée du circuit d'identification et dont la deuxième borne peut être reliée à l'une ou l'autre des bornes d'entrée du récepteur de télévision sous l'action d'un signal de commande (16),
- un diviseur (15) recevant un signal périodique et fournissant un signal pour commander le circuit de sélection selon une première période et le commutateur selon une période moitié, le fonctionnement de ce diviseur étant susceptible d'être inhibé par ledit signal d'inhibition.

2. Circuit de connexion automatique selon la revendication 1, caractérisé en ce que le signal envoyé au diviseur est un signal de retour trame (RT) de télévision.

3. Circuit de connexion automatique selon la revendication 1, caractérisé en ce que la première borne d'entrée du récepteur de télévision est la borne d'entrée d'antenne (CVBS) et la deuxième borne d'entrée une borne S-VHS.

## Patentansprüche

1. Schaltung für einen automatischen Anschluß an einen von zwei Eingangsanschlüssen eines Fernsehempfängers, wobei jeder dieser Eingänge Videosignale gemäß einer von mehreren Normen empfangen kann, welche eine Norm-Identifizierschaltung (10) und eine Auswahlschaltung (11) zum Steuern der Identifizierschaltung umfaßt, wobei die Identifizierschaltung ein Sperrsignal (IN) zu der Auswahlschaltung sendet, wenn sie ein Signal detektiert hat, das der Art von Norm entspricht, für die sie eingestellt ist, dadurch **gekennzeichnet**, daß sie weiterhin umfaßt:
- einen Schalter (14), dessen erster Anschluß (12) mit dem Eingang der Indentifizierschaltung verbunden ist und dessen zweiter Anschluß mit einem der beiden Eingangsanschlüsse des Fernsehempfängers unter der Einwirkung eines Steuersignals (16) verbunden werden kann,
- einen Teiler (15), welcher ein periodisches Signal empfängt und ein Signal zum Steuern der Auswahlschaltung mit einer ersten Periode und des Schalters mit einer halben Periode liefert, wobei die Tätigkeit dieses Teilers durch das Sperrsignal blockiert werden kann.

2. Schaltung für einen automatischen Anschluß nach Anspruch 1, dadurch **gekennzeichnet**, daß das zu dem Teiler gesendete Signal ein Fernseh-Bildrücklaufsignal (RT) ist.

3. Schaltung für einen automatischen Anschluß nach Anspruch 1, dadurch **gekennzeichnet**, daß der erste Eingangsanschluß des Fernsehempfängers der Antennen-Eingangsanschluß (CVBS) und der zweite Eingangsanschluß ein S-VHS-Anschluß ist.

## Claims

1. An automatic connection circuit on either of the two input terminals of a television set, each of these inputs being capable of receiving video signals according to one of several standards, comprising a standard identification circuit (10) and a selection circuit (11) for controlling the identification circuit, the identification circuit sending an inhibition signal (IN) to the selection circuit when it has detected a signal corresponding to the standard type for which it is selected, characterized in that it further comprises:
- a switch (14), the first terminal (12) of which is connected to the input of the identification circuit and the second terminal of which is connected to either of the input terminals of the television set by the action of a control signal (16), and
- a divider (15) receiving a periodic signal and providing a signal for controlling the selection circuit according to a first period and the switch according to a half period, the operation of this divider being inhibited by said inhibition signal.

2. An automatic connection circuit according to claim 1, characterized in that the signal sent to the divider is a television frame retrace signal (RT).

3. An automatic connection circuit according to claim 1, characterized in that the first input terminal of the television set is the antenna input terminal (CVBS) and the second input terminal is an S-VHS terminal.
